# EUROPEAN PATENT APPLICATION

(11) **EP 4 525 141 A1**
(43) Date of publication of application: **19.03.2025**
(21) Application number: 23794831.0
(22) Date of filing: 15.03.2023
(51) Int. Cl.: H01M 10/615, H01M 10/625, H01M 10/657

(54) **HEATING SYSTEM FOR HEATING POWER BATTERY, AND ELECTRIC VEHICLE**

(30) Priority: 28.04.2022 CN 202210456060
(71) Applicant: BYD Company Limited, Shenzhen, Guangdong 518118 (CN)
(72) Inventor: ZHANG, Ke, Shenzhen, Guangdong 518118 (CN); GUO, Zizhu, Shenzhen, Guangdong 518118 (CN); PAN, Yi, Shenzhen, Guangdong 518118 (CN); ZHU, Yan, Shenzhen, Guangdong 518118 (CN); SUN, Huajun, Shenzhen, Guangdong 518118 (CN)
(74) Representative: Mathys & Squire
(86) International application number: PCT/CN2023/081703
(87) International publication number: WO 2023/207395

(57) **Abstract**

The present disclosure provides a heating system for heating a power battery, and an electric vehicle. A power battery comprises a first battery cell group and a second battery cell group that are not equal in electromotive force and connected in series. The heating system comprises an inverter, an alternating-current motor, and a first controller. Midpoints of three bridge arms of the inverter are connected to head ends of three-phase coils of the motor in a one-to-one correspondence manner, and tail ends of the motor are connected together to form a neutral point. The neutral point of the motor is connected to a first connection point by means of a connection line, and the first connection point is a connection point between the first battery cell group and the second battery cell group. The first controller is used for inputting a driving signal to the inverter. The first battery cell group, the second battery cell group, the inverter, the motor, and the connection line form an alternating-current self-heating loop.

## Description

### CROSS-REFERENCE TO RELATED APPLICATIONS

The present disclosure claims priority to and benefits of Chinese Patent Application No. 202210456060.9, filed on April 28, 2022, and entitled "HEATING SYSTEM FOR HEATING POWER BATTERY, AND ELECTRIC VEHICLE". The entire content of the above-referenced application is incorporated herein by reference.

### FIELD

The present disclosure relates to the field of vehicle technologies, and more specifically, to a heating system for heating a power battery, and an electric vehicle.

### BACKGROUND

Characteristics of a power battery are significantly affected by an ambient temperature. Especially in a low-temperature environment, energy and power characteristics of a lithium-ion power battery are severely attenuated. Therefore, the battery needs to be heated at a low temperature. How to improve heating performance of a battery core in a heating manner of self-heating the battery core by using an excitation current becomes a key issue.

### SUMMARY

An objective of the present disclosure is to provide a new technical solution of a heating system for heating a power battery.

Another objective of the present disclosure is to provide a new technical solution of an electric vehicle. The electric vehicle includes a power battery and a heating system.

The present disclosure provides a heating system for heating a power battery, so that heating performance can be improved.

According to a first aspect of the present disclosure, a heating system for heating a power battery is provided. The power battery includes a first battery core group and a second battery core group connected in series, and an electromotive force of the first battery core group is not equal to an electromotive force of the second battery core group. The heating system includes an inverter, an alternating-current motor, and a first controller. The inverter includes three bridge arms, a positive electrode of the power battery is connected to an upper bridge arm of the inverter, and a negative electrode of the power battery is connected to a lower bridge arm of the inverter. Midpoints of the three bridge arms of the inverter are connected to head ends of three-phase coils of the alternating-current motor respectively, and tail ends of the alternating-current motor are connected together to form a neutral point. The neutral point of the alternating-current motor is connected to a first connection point by means of a connection line, and the first connection point is a connection point between the first battery core group and the second battery core group. The first controller is configured to input a drive signal to the inverter. The first battery core group, the second battery core group, the inverter, the alternating-current motor, and the connection line form an alternating-current self-heating loop. The first controller (6) is further configured to adjust the drive signal in a self-heating process, to enable a ratio of a first target difference to a first difference to fall within a preset interval range. The first target difference is a difference between the first difference and a second difference, the first difference is a difference between an electromotive force of the first battery core group and an electromotive force of the second battery core group when self-heating starts, and the second difference is a difference between an electromotive force of the first battery core group and an electromotive force of the second battery core group when the self-heating ends.

According to an embodiment of the present disclosure, the preset interval range is (-0.9, +0.9).

According to an embodiment of the present disclosure, that the first controller adjusts the drive signal in a self-heating process, to enable a ratio of a first target difference to a first difference to fall within a preset interval range includes: adjusting, by the first controller, a duty cycle of the drive signal and/or a time sequence status of the drive signal in the self-heating process, to enable the ratio of the first target difference to the first difference to fall within the preset interval range.

According to an embodiment of the present disclosure, that the first controller adjusts the drive signal in a self-heating process, to enable a ratio of a first target difference to a first difference to fall within a preset interval range includes: adjusting, by the first controller, the drive signal, to enable a ratio of a second target difference to a fifth intensity integration value to fall within the preset interval range.

According to an embodiment of the present disclosure, the second target difference is a difference between the fifth intensity integration value and a sixth intensity integration value, the fifth intensity integration value is an intensity integration value of a current flowing through the first battery core group in the self-heating process, and the sixth intensity integration value is an intensity integration value of a current flowing through the second battery core group in the self-heating process. An intensity integration value of a current is an integration value of a current intensity of the current in terms of time.

According to an embodiment of the present disclosure, that the first controller adjusts the drive signal in a self-heating process, to enable a ratio of a first target difference to a first difference to fall within a preset interval range includes: calculating a first theoretical current and a second theoretical current in the self-heating process; correcting the first theoretical current and the second theoretical current based on a first preset ratio; and setting the drive signal based on a corrected first theoretical current and a corrected second theoretical current. The first theoretical current is a theoretical current flowing through the first battery core group, and the second theoretical current is a theoretical current flowing through the second battery core group.

According to an embodiment of the present disclosure, the first preset ratio is determined in advance by using a heating test experiment; and that the first preset ratio is determined includes: obtaining, as a second ratio, a ratio of a first intensity integration value of a first experimental current to a first intensity integration value of a second experimental current; and determining the first preset ratio, where the first preset ratio is a reciprocal of the second ratio. The first experimental current is an actually measured current flowing through the first battery core group in the heating test experiment, and the second experimental current is an actually measured current flowing through the second battery core group in the heating test experiment. The first intensity integration value of the first experimental current is an intensity integration value of the first experimental current from a start of the heating test experiment to an end of the heating test experiment, and the first intensity integration value of the second experimental current is an intensity integration value of the second experimental current from the start of the heating test experiment to the end of the heating test experiment.

According to an embodiment of the present disclosure, that the first controller adjusts the drive signal in a self-heating process, to enable a ratio of a first target difference to a first difference to fall within a preset interval range includes: obtaining a second intensity integration value of a first actually measured current and a second intensity integration value of a second actually measured current; and setting a drive signal for a next adjustment period based on the second intensity integration value of the first actually measured current and the second intensity integration value of the second actually measured current. The first actually measured current is an actually measured current flowing through the first battery core group, and the second actually measured current is an actually measured current flowing through the second battery core group.

The second intensity integration value of the first actually measured current is an intensity integration value of the first actually measured current from a start of the self-heating to an end of a current adjustment period, and the second intensity integration value of the second actually measured current is an intensity integration value of the second actually measured current from the start of the self-heating to the end of the current adjustment period.

According to an embodiment of the present disclosure, that the first controller adjusts the drive signal in a self-heating process, to enable a ratio of a first target difference to a first difference to fall within a preset interval range includes: obtaining a second intensity integration value of a first actually measured current and a second intensity integration value of a second actually measured current; obtaining a third intensity integration value of the first actually measured current and a third intensity integration value of the second actually measured current; and setting a drive signal for a next adjustment period based on the second intensity integration value of the first actually measured current, the second intensity integration value of the second actually measured current, the third intensity integration value of the first actually measured current, and the third intensity integration value of the second actually measured current.

The first actually measured current is an actually measured current flowing through the first battery core group, and the second actually measured current is an actually measured current flowing through the second battery core group.

The second intensity integration value of the first actually measured current is an intensity integration value of the first actually measured current from a start of the self-heating to an end of a current adjustment period, and the second intensity integration value of the second actually measured current is an intensity integration value of the second actually measured current from the start of the self-heating to the end of the current adjustment period.

The third intensity integration value of the first actually measured current is an intensity integration value of the first actually measured current within the current adjustment period, and the third intensity integration value of the second actually measured current is an intensity integration value of the second actually measured current within the current adjustment period.

According to an embodiment of the present disclosure, the setting a drive signal for a next adjustment period includes: setting a duty cycle and/or a time sequence status of the drive signal for the next adjustment period, so that a second absolute value is less than a first absolute value. The first absolute value is an absolute value of a difference between the second intensity integration value of the first actually measured current and the second intensity integration value of the second actually measured current.

The second absolute value is an absolute value of a difference between a fourth intensity integration value of the first actually measured current and a fourth intensity integration value of the second actually measured current.

The fourth intensity integration value of the first actually measured current is an intensity integration value of the first actually measured current from the start of the self-heating to an end of the next adjustment period, and the fourth intensity integration value of the second actually measured current is an intensity integration value of the second actually measured current from the start of the self-heating to the end of the next adjustment period.

According to an embodiment of the present disclosure, that the first controller adjusts the drive signal in a self-heating process, to enable a ratio of a first target difference to a first difference to fall within a preset interval range includes: obtaining a first effective value of a first actually measured current and a first effective value of a second actually measured current; and setting a drive signal for a next adjustment period based on the first effective value of the first actually measured current and the first effective value of the second actually measured current.

The first actually measured current is an actually measured current flowing through the first battery core group, and the second actually measured current is an actually measured current flowing through the second battery core group.

The first effective value of the first actually measured current is an effective value of the first actually measured current from a start of the self-heating to an end of a current adjustment period, and the first effective value of the second actually measured current is an effective value of the second actually measured current from the start of the self-heating to the end of the current adjustment period.

According to an embodiment of the present disclosure, that the first controller adjusts the drive signal in a self-heating process, to enable a ratio of a first target difference to a first difference to fall within a preset interval range includes: obtaining a first effective value of a first actually measured current and a first effective value of a second actually measured current; obtaining a second effective value of the first actually measured current and a second effective value of the second actually measured current; and setting a drive signal for a next adjustment period based on the first effective value of the first actually measured current, the first effective value of the second actually measured current, the second effective value of the first actually measured current, and the second effective value of the second actually measured current.

The first actually measured current is an actually measured current flowing through the first battery core group, and the second actually measured current is an actually measured current flowing through the second battery core group.

The first effective value of the first actually measured current is an effective value of the first actually measured current from a start of the self-heating to an end of a current adjustment period, and the first effective value of the second actually measured current is an effective value of the second actually measured current from the start of the self-heating to the end of the current adjustment period.

The second effective value of the first actually measured current is an effective value of the first actually measured current within the current adjustment period, and the second effective value of the second actually measured current is an effective value of the second actually measured current within the current adjustment period.

According to an embodiment of the present disclosure, the setting a drive signal for a next adjustment period includes: setting a duty cycle and/or a time sequence status of the drive signal for the next adjustment period, so that a fourth absolute value is less than a third absolute value.

The third absolute value is an absolute value of a difference between the first effective value of the first actually measured current and the first effective value of the second actually measured current.

The fourth absolute value is an absolute value of a difference between a third effective value of the first actually measured current and a third effective value of the second actually measured current.

The third effective value of the first actually measured current is an effective value of the first actually measured current from the start of the self-heating to an end of the next adjustment period, and the third effective value of the second actually measured current is an effective value of the second actually measured current from the start of the self-heating to the end of the next adjustment period.

According to an embodiment of the present disclosure, an adjustment manner of the first controller is a PID adjustment manner.

According to an embodiment of the present disclosure, the first controller is further configured to: in the self-heating process, perform synchronization control on an on/off state of three upper bridge arms, and perform synchronization control on an on/off state of three lower bridge arms.

According to an embodiment of the present disclosure, the first controller is further configured to adjust the drive signal in the self-heating process, so that an average value of an effective value of a current flowing through the first battery core group is between 0.5C and 5C within an entire self-heating period, and an average value of an effective value of a current flowing through the second battery core group is between 0.5C and 5C within the entire self-heating period.

According to an embodiment of the present disclosure, the first controller is further configured to adjust the drive signal in the self-heating process, so that an average value of an effective value of a current flowing through the neutral point of the alternating-current motor is between 1C and 10C within an entire self-heating period.

According to an embodiment of the present disclosure, a central segment is a curved structure including one or more arc structures, or a central segment is a curved structure formed by one or more arc structures and one or more linear structures.

According to a second aspect of the present disclosure, an electric vehicle is provided, including a power battery and the heating system according to any one of the foregoing embodiments.

According to an embodiment of the present disclosure, a loop is added to an original circuit topology of the electric vehicle, and the loop is from a neutral point of an alternating-current motor to a connection point between a first battery core group and a second battery core group. The heating system may improve heating performance as a whole. Based on the heating system for heating a power battery and the electric vehicle in the present disclosure, the first controller adjusts the drive signal in the self-heating process, to enable the ratio of the first target difference to the first difference to fall within the preset interval range, so that it may be ensured that a difference between a charge quantity loss of the first battery core group and a charge quantity loss of the second battery core group is not excessively large at the end of the self-heating, thereby ensuring a balance between the first battery core group and the second battery core group, and reducing adverse effects generated by the self-heating on a quantity of available electric charges and endurance mileage of the electric vehicle.

Other features and advantages of the present disclosure will become apparent based on the following detailed descriptions of exemplary embodiments of the present disclosure with reference to the accompanying drawings.

### BRIEF DESCRIPTION OF THE DRAWINGS

Accompanying drawings are incorporated into and constitute a part of the present disclosure, show embodiments that conform to the present disclosure, and are used together with the present disclosure to describe the principle of the present disclosure.
FIG. 1 is a block diagram of a heating system for heating a power battery according to an embodiment of the present disclosure; and
FIG. 2 is a specific circuit diagram of a heating system for heating a power battery according to an embodiment of the present disclosure.

In the drawings:
1. first battery core group; 2. second battery core group; P-connection point; 3. inverter; 4. alternating-current motor;
N-neutral point; 5. switch; 6. first controller; 7. protection circuit; 8. second controller; and
S1. connection line.

### DETAILED DESCRIPTION

Various exemplary embodiments of the present disclosure will now be described in detail with reference to the accompanying drawings.

The following descriptions of at least one example of the embodiments are merely illustrative in fact, and by no means serve as any limitation to the present disclosure and application or use thereof.

It should be noted that similar numerals and letters refer to similar items in the following accompanying drawings, and therefore, once an item is defined in a figure, further discussion is not required for the item in subsequent accompanying drawings.

In an electric vehicle, an inverter is connected between a power battery and an alternating-current motor. One of main functions of the inverter is to convert, into an alternating current, a direct current that is outputted by the power battery, to drive an alternating-current motor to rotate, thereby driving a wheel end to rotate. In a power battery heating solution in the embodiments of the present disclosure, a circuit topology among the power battery, the inverter, and the alternating-current motor is used to heat the power battery for a temperature increase.

In the embodiments of the present disclosure, the power battery includes a first battery core group and a second battery core group connected in series, and the heating system for heating a power battery includes the inverter, the alternating-current motor, and a first controller. The inverter includes three bridge arms, a positive electrode of the power battery is connected to an upper bridge arm of the inverter, and a negative electrode of the power battery is connected to a lower bridge arm of the inverter. Midpoints of the three bridge arms of the inverter are connected to head ends of three-phase coils of the alternating-current motor respectively, and tail ends of the alternating-current motor are connected together to form a neutral point. The neutral point of the alternating-current motor is connected to a first connection point by means of a connection line, and the first connection point is a connection point between the first battery core group and the second battery core group. The first controller is configured to input a drive signal to the inverter. The first battery core group, the second battery core group, the inverter, the alternating-current motor, and the connection line form an alternating-current self-heating loop. The first controller is configured to input a drive signal to the inverter. Under an action of the drive signal, the inverter is controlled to alternately turn on the first battery core group and the alternating-current motor, as well as the second battery core group and the alternating-current motor, so that the first battery core group and the second battery core group alternately charge each other.

Based on the heating system for heating a power battery, and the electric vehicle in the embodiments of the present disclosure, a loop is added to an original circuit topology of the electric vehicle, and the loop is from the neutral point of the alternating-current motor to the connection point between the first battery core group and the second battery core group. The heating system may improve heating performance as a whole. The following descriptions are provided with reference to the embodiments.

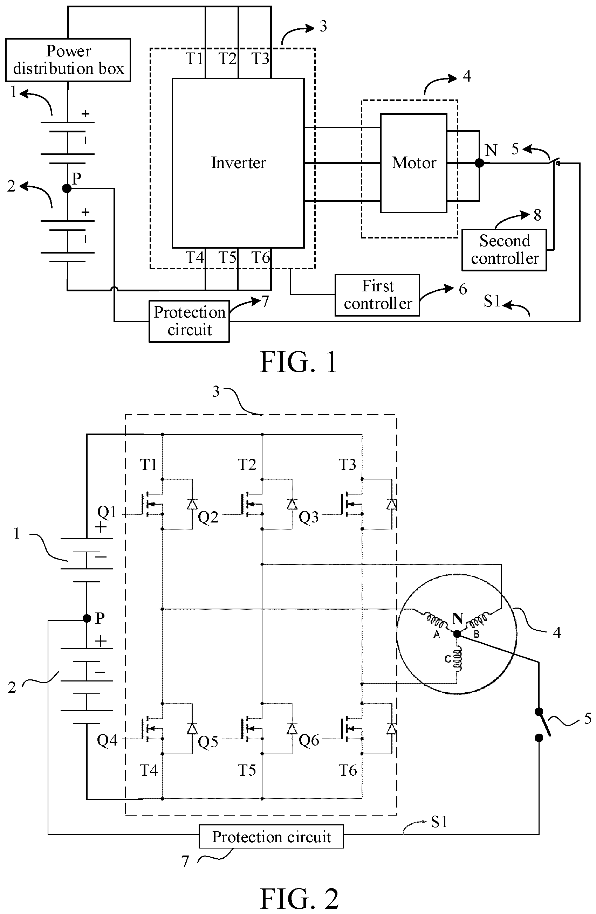

As shown in FIG. 1 and FIG. 2, the heating system for heating a power battery provided in the embodiments of the present disclosure is described.

As shown in FIG. 1 and FIG. 2, the power battery includes a first battery core group 1 and a second battery core group 2 connected in series, and the heating system includes an inverter 3, an alternating-current motor 4, and a first controller 6.

The alternating-current motor 4 is star-connected, three tail ends of three-phase coils (a coil A, a coil B, and a coil C) are connected together as a common end, and the common end is a neutral point N of the alternating-current motor 4.

The inverter 3 includes three bridge arms, a positive electrode of the power battery is connected to an upper bridge arm of the inverter 3, and a negative electrode of the power battery is connected to a lower bridge arm of the inverter 3. Midpoints of the three bridge arms of the inverter 3 are connected to head ends of the three-phase coils of the alternating-current motor 4 respectively. In an example, as shown in FIG. 1 and FIG. 2, the inverter 3 includes an IGBT T1, an IGBT T2, an IGBT T3, an IGBT T4, an IGBT T5, and an IGBT T6. The IGBTs T1 to T6 form three bridge arms. An IGBT (Insulated Gate Bipolar Transistor, insulated gate bipolar transistor) is a composite voltage-driven power semiconductor device that includes a BJT (Bipolar Junction Transistor, bipolar junction transistor) and a MOS transistor (Metal-Oxide-Semiconductor, metal-oxide-semiconductor field-effect transistor), and has advantages of high input impedance of the MOSFET and a low turn-on voltage drop of a GTR (Giant Transistor, giant transistor). As shown in FIG. 2, in the inverter 3, each IGBT is further connected to a diode in parallel, and the diode may play a role of circuit protection. In another embodiment, the IGBTs T1 to T6 may alternatively be replaced with MOS transistors, respectively. In another embodiment, the IGBTs T1 to T6 may alternatively be replaced with silicon carbide (SiC) power tubes, respectively. The neutral point N of the alternating-current motor is connected to a first connection point P by means of a connection line S1, and the first connection point P is a connection point between the first battery core group and the second battery core group.

In an example, the first battery core group and the second battery core group belong to a same battery pack, and the battery pack provides, to the outside, a total positive port, a total negative port, and a third port that is led out from the first connection point P. The third port is connected to the neutral point N of the alternating-current motor by means of the connection line S1.

The first controller 6 is configured to input a drive signal to the inverter 3, to control the inverter 3 to alternately turn on the first battery core group 1 and the alternating-current motor 4, as well as the second battery core group 2 and the alternating-current motor 4, so that the first battery core group 1 and the second battery core group 2 alternately charge each other. In an example, as shown in FIG. 2, the first controller 6 outputs six drive signals Q1 to Q6. The drive signal Q1 is applied to the IGBT T1, the drive signal Q2 is applied to the IGBT T2, the drive signal Q3 is applied to the IGBT T3, the drive signal Q4 is applied to the IGBT T4, the drive signal Q5 is applied to the IGBT T5, and the drive signal Q6 is applied to the IGBT T6. The first controller 6 alternately turns on a loop of the first battery core group 1 and the alternating-current motor 4, and a loop of the second battery core group 2 and the alternating-current motor 4 by applying the drive signals Q1 to Q6 to the IGBTs T1 to T6, so that the first battery core group 1 and the second battery core group 2 alternately charge each other. In an example, the first battery core group 1 discharges, the inverter 3 converts, into an alternating current, a direct current that is output by the first battery core group 1, and inputs the alternating current to the alternating-current motor 4, and the alternating-current motor 4 stores electric energy in a coil to charge the second battery core group 2. Then, the second battery core group 2 discharges, the inverter 3 converts, into an alternating current, a direct current that is output by the second battery core group 2, and inputs the alternating current to the alternating-current motor 4, and the alternating-current motor 4 stores electric energy in the coil to charge the first battery core group 1. Cyclically, the first battery core group 1 and the second battery core group 2 alternately charge each other by using the alternating-current motor 4, to self-heat a battery core.

As shown in FIG. 1 and FIG. 2, a switch 5 is arranged in the connection line S1. The heating system further includes a second controller 8. The second controller 8 is configured to control an on/off state of the switch 5, so that heating lines are turned on when the power battery needs to be heated, and are turned off when the power battery does not need to be heated, to ensure security of a vehicle and the power battery. For example, the second controller 8 controls the switch 5 to be turned off when the electric vehicle is in a driving state, to ensure security of the vehicle during driving.

As shown in FIG. 1 and FIG. 2, a protection circuit 7 is arranged in the connection line S1, such as a fuse and a relay, to improve security in a battery heating process.

FIG. 1 further shows a power distribution box of the electric vehicle. The power distribution box distributes power mainly based on a power load of the electric vehicle.

Based on the heating system for heating a power battery provided in this embodiment of the present disclosure, the connection line is added based on an original circuit topology of the electric vehicle. The connection line is from the neutral point of the alternating-current motor to the connection point between the first battery core group and the second battery core group. A change to an original circuit of the electric vehicle is small, and it is simple and easy to implement the solution.

Based on the heating system for heating a power battery provided in this embodiment of the present disclosure, the upper and lower bridge arms of the inverter are used in a time sharing manner, so that an alternating pulse current can be generated by using three inductance coils of the motor to a greater extent, thereby quickly heating the two battery core groups.

In a self-heating process of the power battery, a frequency and a magnitude of a charging and discharging current, that is, an excitation current, are limited by a related component. The heating system provided in this embodiment of the present disclosure may reduce a degree of limitation of the excitation current, making it possible to heat the battery by using a relatively large excitation current. In a self-heating working condition of a traditional battery pack, a maximum current of the inverter is limited by a minimum current among tolerance currents of the IGBTs T1 to T6. However, in this embodiment of the present disclosure, the maximum current of the inverter is limited by a sum of tolerance currents of the IGBTs T1, T2, and T3, and a sum of tolerance currents of IGBTs T4, T5, and T6, thereby greatly increasing a range of available currents.

The self-heating system in this embodiment of the present disclosure may further include a measurement system and a battery management system (Battery Management System, BMS). In the self-heating process, relevant data monitored by the measurement system and the battery management system is output and fed back to the first controller in real time, and the first controller dynamically adjusts, based on a preset policy, the frequency or the amplitude of the excitation current that is output by the self-heating system.

In this embodiment of the present disclosure, a start of self-heating means that the connection line S1 changes from a turned-off state to a turned-on state, and that the first battery core group and the second battery core group start to alternately charge each other. An end of the self-heating means that the connection line S1 changes from a turned-on state to a turned-off state, and that the first battery core group and the second battery core group no longer alternately charge each other.

In this embodiment of the present disclosure, an electromotive force of the first battery core group is not equal to an electromotive force of the second battery core group, meaning that at the start of the self-heating, a voltage difference between two ends of the first battery core group is not equal to a voltage difference between two ends of the second battery core group.

In an example, there is a difference between a situation of battery core units in the first battery core group and a situation of battery core units in the second battery core group, resulting in the electromotive force of the first battery core group being not equal to the electromotive force of the second battery core group. Such a difference may be a difference between quantities of the battery core units, a difference between materials of the battery core units, or a difference between models of the battery core units. In an example, that the electromotive force of the first battery core group is not equal to the electromotive force of the second battery core group may be: A rated electromotive force of the first battery core group is not equal to a rated electromotive force of the second battery core group.

In an example, an initial design of the first battery core group is the same as an initial design of the second battery core group, that is, an initial electromotive force of the first battery core group is equal to an initial electromotive force of the second battery core group. However, due to daily use of the electric vehicle, the first battery core group and the second battery core group have different degrees of losses, resulting in that the electromotive force of the first battery core group becomes not equal to the electromotive force of the second battery core group.

In an example, the first battery core group and the second battery core group belong to a same battery pack, the electromotive force of the first battery core group is not equal to the electromotive force of the second battery core group, the first connection point is an unequipotential point, and the connection line is connected to the unequipotential point of the battery pack. The unequipotential point means that an absolute value of a voltage difference from the point to the total positive port of the battery pack is not equal to an absolute value of a voltage difference from the point to the total negative port of the battery pack. As shown in FIG. 2, a battery core unit included in the first battery core group 1 and a battery core unit included in the second battery core group 2 are the same in model and different in quantity. Therefore, the electromotive force of the first battery core group 1 is different from the electromotive force of the second battery core group 2, and the connection point P is an unequipotential point.

In a traditional solution, a power electronic switch in the inverter has an error during switching, a coil of the alternating-current motor has a loss during high current oscillation, and a Hall element used for measurement has an error during measurement. Therefore, power consumption of a current flowing through the first battery core group 1 and power consumption flowing through the second battery core group 2 cannot be maintained, and there is an error between the two. Consequently, a charge quantity loss of the first battery core group 1 is inconsistent with a charge quantity loss of the second battery core group 2 in a long-term self-heating working condition (a charge quantity loss error occurs), thereby causing a difference between a SOC (State of Charge, state of charge) of the battery core unit in the first battery core group 1 and a SOC of the battery core unit in the second battery core group 2.

Battery core units in the power battery are connected in series, and a quantity of available electric charges of the integrated vehicle is limited to a lowest one of SOCs of the battery core units. Therefore, the inconsistency between the charge quantity loss of the first battery core group 1 and the charge quantity loss of the second battery core group 2 in the self-heating working condition adversely affects the quantity of available electric charges and endurance mileage of the electric vehicle.

In this embodiment of the present disclosure, to resolve the problem, the first controller 6 is further configured to adjust the drive signal in the self-heating process, to enable a ratio of a first target difference to a first difference to fall within a preset interval range. The first target difference is a difference between the first difference and a second difference, the first difference is a difference between an electromotive force of the first battery core group 1 and an electromotive force of the second battery core group 2 when the self-heating starts, and the second difference is a difference between an electromotive force of the first battery core group 1 and an electromotive force of the second battery core group 2 when the self-heating ends. The ratio of the first target difference to the first difference falls within the preset interval range, meaning that when the self-heating ends, a difference between a total charge quantity loss of the first battery core group 1 in an entire heating process and a total charge quantity loss of the second battery core group 2 in the entire heating process falls within a range, thereby ensuring a balance between the first battery core group 1 and the second battery core group 2, and controlling adverse effects generated by the self-heating on the quantity of available electric charges and the endurance mileage of the electric vehicle to a degree.

In an example, that the first controller 6 adjusts the drive signal in a self-heating process, to enable a ratio of a first target difference to a first difference to fall within a preset interval range includes: adjusting, by the first controller 6, the drive signal, to enable a ratio of a second target difference to a fifth intensity integration value to fall within the preset interval range. The second target difference is a difference between the fifth intensity integration value and a sixth intensity integration value, the fifth intensity integration value is an intensity integration value of a current flowing through the first battery core group 1 in the self-heating process, and the sixth intensity integration value is an intensity integration value of a current flowing through the second battery core group 2 in the self-heating process. An intensity integration value of a current is an integration value of a current intensity of the current in terms of time. In this example, both the current flowing through the first battery core group 1 and the current flowing through the second battery core group 2 refer to theoretical currents or actually measured currents.

In an example, the preset interval range is (-0.9, +0.9).

In an example, the preset interval range is (-0.5, +0.5).

In an example, the preset interval range is (-0.1, +0.1).

In an example, the preset interval range is (-0.05, +0.05).

In an example, the preset interval range is (-0.005, +0.005).

In an example, different first differences correspond to different preset interval ranges, that is, a difference between the electromotive force of the first battery core group 1 and the electromotive force of the second battery core group 2 at the start of the self-heating affects the preset interval range. In an example, a smaller difference between the electromotive force of the first battery core group 1 and the electromotive force of the second battery core group 2 at the start of the self-heating may lead to a wider preset interval range (for example, the preset interval range is (-0.9, +0.9)). A larger difference between the electromotive force of the first battery core group 1 and the electromotive force of the second battery core group 2 at the start of the self-heating leads to a narrower preset interval range (for example, the preset interval range is (-0.05, +0.05)). In an example, a mapping relationship between the first difference and the preset interval range is pre-stored in the electric vehicle. When the self-heating needs to be performed, the difference between the electromotive force of the first battery core group 1 and the electromotive force of the second battery core group 2 is detected, and the corresponding preset interval range is searched for based on the pre-stored mapping relationship.

In this embodiment of the present disclosure, an intensity integration value of a current is an integration value of a current intensity of the current in terms of time. The current intensity is a value of the current, and is a positive value. The current intensity may represent a charge quantity passing through a conductor per unit of time.

In this embodiment of the present disclosure, a theoretical current is a theoretical current determined through non-actual measurement, and may be calculated based on the drive signal. An actually measured current refers to a current determined through actual measurement.

In an example, that the first controller adjusts the drive signal in a self-heating process, to enable a ratio of a first target difference to a first difference to fall within a preset interval range includes: adjusting, by the first controller, a duty cycle of the drive signal and/or a time sequence status of the drive signal in the self-heating process, to enable the ratio of the first target difference to the first difference to fall within the preset interval range.

In this embodiment of the present disclosure, a time sequence status of the drive signal is time sequence statuses of drive signals Q1 to Q3 of three upper bridge arms, or time sequence statuses of drive signals Q4 to Q6 of three lower bridge arms. It is assumed that "1" indicates that an upper bridge arm is turned on. When the upper bridge arm is turned on, a lower bridge arm corresponding to the upper bridge arm is turned off. "0" indicates that an upper bridge arm is turned off. When the upper bridge arm is turned off, a lower bridge arm corresponding to the upper bridge arm is turned on. In this case, there are eight time sequences of three-phase bridge arms of the inverter, that is, there are eight time sequence statuses of drive signals, that is, U0 (000), U1 (001), U2 (010), U3 (011), U4 (100), U5 (101), U6 (110), and U7 (111). U1 (001), U2 (010), U3 (011), U4 (100), U5 (101), and U6 (110) are non-zero vectors, and U0 (000) and U7 (111) are zero vectors.

In an example, that the first controller adjusts the drive signal in a self-heating process includes: adjusting, by the first controller, the drive signal in the self-heating process in a dynamic and real-time manner. That is, the first controller adjusts the drive signal in real time, so that the difference between the charge quantity loss of the first battery core group 1 and the charge quantity loss of the second battery core group 2 is corrected in time, thereby avoiding drastic fluctuation of the excitation current.

The following describes a first manner of adjusting the drive signal.

### Example 1:

First, a first preset ratio is determined in advance by using a heating test experiment. The heating test experiment may be a heating test performed on an electric vehicle before the integrated vehicle leaves a factory. An excitation current may be accurately measured by using a high-precision Hall element or the like.

In an example, a process of determining the first preset ratio includes step S102 and step S104.

Step S102: A ratio of a first intensity integration value of a first experimental current to a first intensity integration value of a second experimental current is obtained as a second ratio.

At a start of the heating test experiment, the drive signal is set, to enable a ratio of a first intensity integration value of a first theoretical current to a first intensity integration value of a second theoretical current to be 1. In this case, the first experimental current and the second experimental current are obtained. The first theoretical current is a theoretical current flowing through a first battery core group 1, and the second theoretical current is a theoretical current flowing through a second battery core group 2. The first theoretical current and the second theoretical current are currents determined through non-actual measurement, and may be calculated based on the drive signal. The first intensity integration value of the first theoretical current is an intensity integration value of the first theoretical current from the start of the heating test experiment to an end of the heating test experiment, and the first intensity integration value of the second theoretical current is an intensity integration value of the second theoretical current from the start of the heating test experiment to the end of the heating test experiment.

The first experimental current is an actually measured current flowing through the first battery core group 1 in the heating test experiment, and the second experimental current is an actually measured current flowing through the second battery core group 2 in the heating test experiment. During the heating test experiment, the first experimental current and the second experimental current are obtained through actual measurement. The first intensity integration value of the first experimental current is an intensity integration value of the first experimental current from the start of the heating test experiment to the end of the heating test experiment, and the first intensity integration value of the second experimental current is an intensity integration value of the second experimental current from the start of the heating test experiment to the end of the heating test experiment.

Step S104: The first preset ratio is determined, where the first preset ratio is a reciprocal of the second ratio.

The first experimental current and the second experimental current include effects caused by an electronic control error and a motor coil loss. The first intensity integration value of the first experimental current may reflect an actual charge quantity loss of the first battery core group 1 in the heating test experiment when the first theoretical current is used, and the first intensity integration value of the second experimental current may reflect an actual charge quantity loss of the second battery core group 2 in the heating test experiment when the second theoretical current is used.

For example, if the ratio of the first intensity integration value of the first experimental current to the first intensity integration value of the second experimental current is 99/100, the first preset ratio is 100/99.

For battery packs of different models, a first preset ratio corresponding to a battery pack of each model needs to be determined by using a heating test experiment of each battery pack. For a plurality of battery packs of a same model, if the first battery core group 1 and the second battery core group 2 are grouped differently in each battery pack, a first preset ratio corresponding to each battery pack also needs to be determined by using a heating test experiment of each battery pack.

That the first controller adjusts the drive signal in a self-heating process, to enable a ratio of a first target difference to a first difference to fall within a preset interval range may include step S202 to step S206.

Step S202: A first theoretical current and a second theoretical current in the self-heating process are calculated.

Step S204: The first theoretical current and the second theoretical current are corrected based on the first preset ratio.

In an example, after the first theoretical current and the second theoretical current are corrected based on the first preset ratio, a ratio of a second intensity integration value of the first theoretical current to a second intensity integration value of the second theoretical current is the first preset ratio. The second intensity integration value of the first theoretical current is an intensity integration value of the first theoretical current from a start of self-heating to an end of the self-heating, and the second intensity integration value of the second theoretical current is an intensity integration value of the second theoretical current from the start of the self-heating to the end of the self-heating.

Step S206: The drive signal is set based on a corrected first theoretical current and a corrected second theoretical current.

After the drive signal is set based on the corrected first theoretical current and the corrected second theoretical current, the first theoretical current calculated based on the drive signal is the foregoing corrected first theoretical current, and the second theoretical current calculated based on the drive signal is the foregoing corrected second theoretical current.

In such an adjustment manner, although a charge quantity loss error caused by the electric control error and the motor coil loss still exists, because the drive signal is set based on the corrected first theoretical current and the corrected second theoretical current, the charge quantity loss error caused by the electric control error and the motor coil loss may be compensated for, thereby ensuring that an intensity integration value of a first actually measured current from the start of the self-heating to the end of the self-heating is basically the same as an intensity integration value of a second actually measured current from the start of the self-heating to the end of the self-heating. In the first adjustment manner, it may be ensured that a difference between a total charge quantity loss of the first battery core group 1 and a total charge quantity loss of the second battery core group 2 caused by the self-heating falls within a range, thereby ensuring a balance between the first battery core group 1 and the second battery core group 2, and controlling adverse effects generated by the self-heating on a quantity of available electric charges and endurance mileage of the electric vehicle to a degree.

### Example 2:

First, a first preset ratio is determined in advance by using a heating test experiment. The heating test experiment may be a heating test performed on an electric vehicle before the integrated vehicle leaves a factory. An excitation current may be accurately measured by using a high-precision Hall element or the like.

In an example, a process of determining the first preset ratio includes step P102 and step P104.

Step P102: A ratio of a fourth effective value of a first actually measured current to a fourth effective value of a second actually measured current is obtained as a second ratio.

In this embodiment of the present disclosure, an effective value of a current is a root mean square value known in the industry, and is defined as follows: Heat generated by the current passing through a resistor within a given time period is equal to heat generated by a direct current passing through the resistor within the same time period. A value of the direct current is the effective value of the current.

At a start of the heating test experiment, a drive signal is set, to enable a ratio of a first effective value of a first theoretical current to a first effective value of a second theoretical current to be 1. In this case, the first actually measured current and the second actually measured current are obtained. The first theoretical current is a theoretical current flowing through a first battery core group 1, and the second theoretical current is a theoretical current flowing through a second battery core group 2. The first theoretical current and the second theoretical current are currents determined through non-actual measurement, and may be calculated based on the drive signal. The first effective value of the first theoretical current is an effective value of the first theoretical current from the start of the heating test experiment to an end of the heating test experiment, and the first effective value of the second theoretical current is an effective value of the second theoretical current from the start of the heating test experiment to the end of the heating test experiment.

The first actually measured current is an actually measured current flowing through the first battery core group 1, and the second actually measured current is an actually measured current flowing through the second battery core group 2. During the heating test experiment, the first actually measured current and the second actually measured current are obtained through actual measurement. The fourth effective value of the first actually measured current is an effective value of the first actually measured current from the start of the heating test experiment to the end of the heating test experiment, and the fourth effective value of the second actually measured current is an effective value of the second actually measured current from the start of the heating test experiment to the end of the heating test experiment.

Step P104: The first preset ratio is determined, where the first preset ratio is a reciprocal of the second ratio.

The first actually measured current and the second actually measured current include effects caused by an electronic control error and a motor coil loss. The fourth effective value of the first actually measured current may reflect an actual charge quantity loss of the first battery core group 1 in the heating test experiment when the first theoretical current is used, and the fourth effective value of the second actually measured current may reflect an actual charge quantity loss of the second battery core group 2 in the heating test experiment when the second theoretical current is used.

For example, if the ratio of the fourth effective value of the first actually measured current to the fourth effective value of the second actually measured current is 99/100, the first preset ratio is 100/99.

For battery packs of different models, a first preset ratio corresponding to a battery pack of each model needs to be determined by using a heating test experiment of each battery pack. For a plurality of battery packs of a same model, if the first battery core group 1 and the second battery core group 2 are grouped differently in each battery pack, a first preset ratio corresponding to each battery pack also needs to be determined by using a heating test experiment of each battery pack.

That the first controller adjusts the drive signal in a self-heating process, to enable a ratio of a first target difference to a first difference to fall within a preset interval range may include step P202 to step P206.

Step P202: A first theoretical current and a second theoretical current in the self-heating process are calculated.

Step P204: The first theoretical current and the second theoretical current are corrected based on the first preset ratio.

In an example, after the first theoretical current and the second theoretical current are corrected based on the first preset ratio, a ratio of a second effective value of the first theoretical current to a second effective value of the second theoretical current is the first preset ratio. The second effective value of the first theoretical current is an effective value of the first theoretical current from a start of self-heating to an end of the self-heating, and the second effective value of the second theoretical current is an effective value of the second theoretical current from the start of the self-heating to the end of the self-heating.

Step P206: The drive signal is set based on a corrected first theoretical current and a corrected second theoretical current.

After the drive signal is set based on the corrected first theoretical current and the corrected second theoretical current, the first theoretical current calculated based on the drive signal is the foregoing corrected first theoretical current, and the second theoretical current calculated based on the drive signal is the foregoing corrected second theoretical current.

In such an adjustment manner, although a charge quantity loss error caused by the electric control error and the motor coil loss still exists, because the drive signal is set based on the corrected first theoretical current and the corrected second theoretical current, the charge quantity loss error caused by the electric control error and the motor coil loss may be compensated for, thereby ensuring that an effective value of a first actually measured current from the start of the self-heating to the end of the self-heating is basically the same as an effective value of a second actually measured current from the start of the self-heating to the end of the self-heating. In the first adjustment manner, it may be ensured that a difference between a total charge quantity loss of the first battery core group 1 and a total charge quantity loss of the second battery core group 2 caused by the self-heating falls within a range, thereby ensuring a balance between the first battery core group 1 and the second battery core group 2, and controlling adverse effects generated by the self-heating on a quantity of available electric charges and endurance mileage of the electric vehicle to a degree.

The following describes a second manner of adjusting the drive signal.

### Example 1:

That the first controller adjusts the drive signal in a self-heating process, to enable a ratio of a first target difference to a first difference to fall within a preset interval range includes step S302 and step S304.

Step S302: A second intensity integration value of a first actually measured current and a second intensity integration value of a second actually measured current are obtained.

The first actually measured current is an actually measured current flowing through a first battery core group 1, and the second actually measured current is an actually measured current flowing through a second battery core group 2.

The second intensity integration value of the first actually measured current is an intensity integration value of the first actually measured current from a start of self-heating to an end of a current adjustment period, and the second intensity integration value of the second actually measured current is an intensity integration value of the second actually measured current from the start of the self-heating to the end of the current adjustment period.

Step S304: A drive signal is set for a next adjustment period based on the second intensity integration value of the first actually measured current and the second intensity integration value of the second actually measured current.

In an example, that a drive signal is set for a next adjustment period includes: setting a duty cycle and/or a time sequence status of the drive signal for the next adjustment period, so that a second absolute value is less than a first absolute value. The first absolute value is an absolute value of a difference between the second intensity integration value of the first actually measured current and the second intensity integration value of the second actually measured current. The second absolute value is an absolute value of a difference between a fourth intensity integration value of the first actually measured current and a fourth intensity integration value of the second actually measured current. The fourth intensity integration value of the first actually measured current is an intensity integration value of the first actually measured current from the start of the self-heating to an end of the next adjustment period, and the fourth intensity integration value of the second actually measured current is an intensity integration value of the second actually measured current from the start of the self-heating to the end of the next adjustment period.

For example, if the second intensity integration value of the first actually measured current is 90, and the second intensity integration value of the second actually measured current is 100, the first absolute value is 10. The drive signal is set for the next adjustment period, so that the fourth intensity integration value of the first actually measured current becomes 95, and the fourth intensity integration value of the second actually measured current becomes 102. In this case, the second absolute value is 7. The second absolute value is less than the first absolute value, indicating that a difference between a total charge quantity loss of the first battery core group 1 and a total charge quantity loss of the second battery core group 2 decreases when the next period ends.

In an example, if a ratio of the second intensity integration value of the first actually measured current to the second intensity integration value of the second actually measured current falls within a preset interval range, the drive signal may not be adjusted. The drive signal for the next adjustment period is the same as that for the current adjustment period. If the second intensity integration value of the first actually measured current and the second intensity integration value of the second actually measured current fall out of the preset interval range, the duty cycle and/or the time sequence status of the drive signal for the next adjustment period are/is set, so that the second absolute value is less than the first absolute value.

In this example, the first controller adjusts the drive signal in real time, so that the difference between the charge quantity loss of the first battery core group 1 and the charge quantity loss of the second battery core group 2 is corrected in time, thereby avoiding drastic fluctuation of an excitation current, and improving stability of the self-heating process.

Example 2: That the first controller adjusts the drive signal in a self-heating process, to enable a ratio of a first target difference to a first difference to fall within a preset interval range includes step S402 to step S406.

Step S402: A second intensity integration value of a first actually measured current and a second intensity integration value of a second actually measured current are obtained.

The first actually measured current is an actually measured current flowing through a first battery core group 1, and the second actually measured current is an actually measured current flowing through a second battery core group.

The second intensity integration value of the first actually measured current is an intensity integration value of the first actually measured current from a start of self-heating to an end of a current adjustment period, and the second intensity integration value of the second actually measured current is an intensity integration value of the second actually measured current from the start of the self-heating to the end of the current adjustment period.

Step S404: A third intensity integration value of the first actually measured current and a third intensity integration value of the second actually measured current are obtained.

The third intensity integration value of the first actually measured current is an intensity integration value of the first actually measured current within the current adjustment period, and the third intensity integration value of the second actually measured current is an intensity integration value of the second actually measured current within the current adjustment period.

Step S406: A drive signal is set for a next adjustment period based on the second intensity integration value of the first actually measured current, the second intensity integration value of the second actually measured current, the third intensity integration value of the first actually measured current, and the third intensity integration value of the second actually measured current.

In an example, that a drive signal is set for a next adjustment period includes: setting a duty cycle and/or a time sequence status of the drive signal for the next adjustment period, so that a second absolute value is less than a first absolute value. The first absolute value is an absolute value of a difference between the second intensity integration value of the first actually measured current and the second intensity integration value of the second actually measured current. The second absolute value is an absolute value of a difference between a fourth intensity integration value of the first actually measured current and a fourth intensity integration value of the second actually measured current. The fourth intensity integration value of the first actually measured current is an intensity integration value of the first actually measured current from the start of the self-heating to an end of the next adjustment period, and the fourth intensity integration value of the second actually measured current is an intensity integration value of the second actually measured current from the start of the self-heating to the end of the next adjustment period.

In an example, if a ratio of the second intensity integration value of the first actually measured current to the second intensity integration value of the second actually measured current falls within a preset interval range, and a ratio of the third intensity integration value of the first actually measured current to the third intensity integration value of the second actually measured current also falls within the preset interval range, the drive signal may not be adjusted. The drive signal for the next adjustment period is the same as that for the current adjustment period. If the ratio of the second intensity integration value of the first actually measured current to the second intensity integration value of the second actually measured current falls out of the preset interval range, the duty cycle and/or the time sequence status of the drive signal for the next adjustment period are/is set, so that the second absolute value is less than the first absolute value. If the ratio of the third intensity integration value of the first actually measured current to the third intensity integration value of the second actually measured current falls out of the preset interval range, the duty cycle and/or the time sequence status of the drive signal in the next adjustment period are/is set, so that the second absolute value is less than the first absolute value.

In this example, the first controller adjusts the drive signal in real time, so that the difference between the charge quantity loss of the first battery core group 1 and the charge quantity loss of the second battery core group 2 is corrected in time, thereby avoiding drastic fluctuation of the excitation current, and improving stability of the self-heating process. In addition, during an adjustment of the drive signal, the drive signal may be determined for the next adjustment period in a refined manner in consideration of all the second intensity integration value of the first actually measured current, the second intensity integration value of the second actually measured current, the third intensity integration value of the first actually measured current, and the third intensity integration value of the second actually measured current.

### Example 3:

That the first controller adjusts the drive signal in a self-heating process, to enable a ratio of a first target difference to a first difference to fall within a preset interval range includes step P302 and step P304.

Step P302: A first effective value of a first actually measured current and a first effective value of a second actually measured current are obtained.

The first actually measured current is an actually measured current flowing through a first battery core group 1, and the second actually measured current is an actually measured current flowing through a second battery core group 2.

The first effective value of the first actually measured current is an effective value of the first actually measured current from a start of self-heating to an end of a current adjustment period, and the first effective value of the second actually measured current is an effective value of the second actually measured current from the start of the self-heating to the end of the current adjustment period.

Step P304: A drive signal is set for a next adjustment period based on the first effective value of the first actually measured current and the first effective value of the second actually measured current.

In an example, that a drive signal is set for a next adjustment period includes: setting a duty cycle and/or a time sequence status of the drive signal for the next adjustment period, so that a fourth absolute value is less than a third absolute value. The third absolute value is an absolute value of a difference between the first effective value of the first actually measured current and the first effective value of the second actually measured current. The fourth absolute value is an absolute value of a difference between a third effective value of the first actually measured current and a third effective value of the second actually measured current. The third effective value of the first actually measured current is an effective value of the first actually measured current from the start of the self-heating to an end of the next adjustment period, and the third effective value of the second actually measured current is an effective value of the second actually measured current from the start of the self-heating to the end of the next adjustment period.

For example, if the first effective value of the first actually measured current is 90, and the first effective value of the second actually measured current is 100, the third absolute value is 10. The drive signal is adjusted for the next adjustment period, so that the third effective value of the first actually measured current becomes 95, and the third effective value of the second actually measured current becomes 102. In this case, the fourth absolute value is 7. The fourth absolute value is less than the third absolute value, indicating that a difference between a total charge quantity loss of the first battery core group 1 and a total charge quantity loss of the second battery core group 2 decreases when the next period ends.

In an example, if a ratio of the first effective value of the first actually measured current to the first effective value of the second actually measured current falls within a preset interval range, the drive signal is not adjusted for the next adjustment period. If the first effective value of the first actually measured current and the first effective value of the second actually measured current fall out of the preset interval range, a duty cycle of the drive signal and/or a time sequence status of the drive signal in the next adjustment period are/is adjusted, so that the fourth absolute value is less than the third absolute value.

In this example, the first controller adjusts the drive signal in real time, so that the difference between the charge quantity loss of the first battery core group 1 and the charge quantity loss of the second battery core group 2 is corrected in time, thereby avoiding drastic fluctuation of the excitation current, and improving stability of the self-heating process.

Example 4: That the first controller adjusts the drive signal in a self-heating process, to enable a ratio of a first target difference to a first difference to fall within a preset interval range includes step P402 to step P406.

Step P402: A first effective value of a first actually measured current and a first effective value of a second actually measured current are obtained.

The first actually measured current is an actually measured current flowing through a first battery core group 1, and the second actually measured current is an actually measured current flowing through a second battery core group 2.

The first effective value of the first actually measured current is an effective value of the first actually measured current from a start of self-heating to an end of a current adjustment period, and the first effective value of the second actually measured current is an effective value of the second actually measured current from the start of the self-heating to the end of the current adjustment period.

Step P404: A second effective value of the first actually measured current and a second effective value of the second actually measured current are obtained.

The second effective value of the first actually measured current is an effective value of the first actually measured current within the current adjustment period, and the second effective value of the second actually measured current is an effective value of the second actually measured current within the current adjustment period.

Step P406: A drive signal is set for a next adjustment period based on the first effective value of the first actually measured current, the first effective value of the second actually measured current, the second effective value of the first actually measured current, and the second effective value of the second actually measured current.

In an example, that a drive signal is set for a next adjustment period includes: setting a duty cycle and/or a time sequence status of the drive signal for the next adjustment period, so that a fourth absolute value is less than a third absolute value. The third absolute value is an absolute value of a difference between the first effective value of the first actually measured current and the first effective value of the second actually measured current. The fourth absolute value is an absolute value of a difference between a third effective value of the first actually measured current and a third effective value of the second actually measured current. The third effective value of the first actually measured current is an effective value of the first actually measured current from the start of the self-heating to an end of the next adjustment period, and the third effective value of the second actually measured current is an effective value of the second actually measured current from the start of the self-heating to the end of the next adjustment period.

In an example, if a ratio of the first effective value of the first actually measured current to the first effective value of the second actually measured current falls within a preset interval range, and a ratio of the second effective value of the first actually measured current to the second effective value of the second actually measured current also falls within the preset interval range, the drive signal is not adjusted for the next adjustment period. If the ratio of the first effective value of the first actually measured current to the first effective value of the second actually measured current falls out of the preset interval range, a duty cycle of the drive signal and/or a time sequence status of the drive signal are/is adjusted for the next adjustment period, so that the fourth absolute value is less than the third absolute value. If the ratio of the second effective value of the first actually measured current to the second effective value of the second actually measured current falls out of the preset interval range, the duty cycle of the drive signal and/or the time sequence status of the drive signal are/is adjusted for the next adjustment period, so that the fourth absolute value is less than the third absolute value.

In this example, the first controller adjusts the drive signal in real time, so that a difference between a charge quantity loss of the first battery core group 1 and a charge quantity loss of the second battery core group 2 is corrected in time, thereby avoiding drastic fluctuation of an excitation current, and improving stability of the self-heating process. In addition, during an adjustment of the drive signal, the drive signal may be determined for the next adjustment period in a refined manner in consideration of all the first effective value of the first actually measured current, the first effective value of the second actually measured current, the second effective value of the first actually measured current, and the second effective value of the second actually measured current.

In the second adjustment manner, a control manner of the first controller is feedback closed-loop control. In an example, an adjustment manner of the first controller is PI (Proportion Integration, proportion integration) control. In an example, an adjustment manner of the first controller is PID (Proportion Integration Differentiation, proportion integration differentiation) control, that is, combined control of three functions of a proportion, an integration, and differentiation. Proportion control is a simple proportion control manner. A steady-state error exists in a system when only proportion control is used, and a fixed disturbance added by the outside cannot be completely eliminated. A main purpose of integration control is to eliminate the steady-state error. A purpose of differentiation control is to eliminate drastic fluctuation.

In the second adjustment manner, although a charge quantity loss error caused by an electric control error and a motor coil loss still exists, the errors are corrected and compensated for in time based on the adjustment period, thereby ensuring that an intensity integration value or an effective value of the first actually measured current from the start of the self-heating to an end of the self-heating is basically the same as an intensity integration value or an effective value of the second actually measured current from the start of the self-heating to the end of the self-heating. In the second adjustment manner, it may be ensured that a difference between a total charge quantity loss of the first battery core group 1 and a total charge quantity loss of the second battery core group 2 caused by the self-heating falls within a range, thereby ensuring a balance between the first battery core group 1 and the second battery core group 2, and controlling adverse effects generated by the self-heating on a quantity of available electric charges and endurance mileage of the electric vehicle to a degree.

In the self-heating process of the power battery, controlling an excitation current is very critical. An inventor found through research that under an action of a relatively large excitation current, a temperature of the power battery increases relatively quickly. However, as the excitation current increases, adverse effects caused on a battery capacity in the heating process also increase. Therefore, both the factors need to be considered in the self-heating process.

In this embodiment of the present disclosure, a battery core unit in a battery core group is a lithium iron phosphate battery core unit, a ternary lithium battery core unit, or a battery of another chemical system. After a capacity retention rate of the two batteries during self-heating is obtained in advance by using a large quantity of tests, the following control policy is formulated:

In an example, the first controller is further configured to adjust the drive signal in the self-heating process, so that an average value of an effective value of a current flowing through the first battery core group 1 is between 0.5C and 5C within an entire self-heating period, and an average value of an effective value of a current flowing through the second battery core group 2 is between 0.5C and 5C within the entire self-heating period. In an example, the requirement may be implemented by adjusting a duty cycle and/or a time sequence status of the drive signal. In this example, both the current flowing through the first battery core group 1 and the current flowing through the second battery core group 2 refer to theoretical currents or actually measured currents.

In an example, the first controller is further configured to adjust the drive signal in the self-heating process, so that an average value of an effective value of a current flowing through a neutral point of an alternating-current motor is between 1C and 10C within the entire self-heating period. In an example, the requirement may be implemented by adjusting a duty cycle and/or a time sequence status of the drive signal. In this example, both the current flowing through the first battery core group 1 and the current flowing through the second battery core group 2 refer to theoretical currents or actually measured currents.

In an example, a drive signal output by the first controller is a PWM (Pulse width modulation wave, pulse width modulation) drive signal. In an example, the first controller outputs a drive signal in an SVPWM (Space Vector Pulse Width Modulation, space vector pulse width modulation) modulation scheme. By adjusting the duty cycle, the time sequence, and the like of the drive signal, an IGBT may output current signals with different frequencies and amplitudes in real time.

By using the foregoing control policy, a battery core may be prevented from overcharging or overdischarging at a low temperature, thereby ensuring security of the battery core. In this embodiment of the present disclosure, by using the foregoing self-heating policy, heating efficiency and security are considered in the self-heating process, the power battery may be efficiently heated, excessively much damage to a battery life is avoided, and battery security is ensured. In this embodiment of the present disclosure, the foregoing policies may be superimposed to obtain a better effect.

In an example, the first controller is further configured to: in the self-heating process, perform synchronization control on an on/off state of three upper bridge arms, and perform synchronization control on an on/off state of three lower bridge arms. That is, the three upper bridge arms are all turned on/off. Correspondingly, the three lower bridge arms are all turned off/on. In this manner, performance of a power electronic switch may be fully utilized, and a self-heating effect is enhanced.

The first controller in this embodiment of the present disclosure may include a processor, a memory, and a program or an instruction stored in the memory and executable by the processor. The program or instruction implements any heating control policy according to the foregoing embodiments when executed by the processor.

An embodiment of the present disclosure provides an electric vehicle, including a power battery and the heating system for heating a power battery according to any one of the foregoing embodiments.

The embodiments of the present disclosure are all described in a progressive manner, for same or similar parts in the embodiments, refer to these embodiments, and descriptions of each embodiment focus on a difference from other embodiments. For related details of the embodiment of the electric vehicle, refer to the partial descriptions of the embodiment of the heating system.

Embodiments of the present disclosure are described above. Other embodiments fall within the scope of the appended claims. In some embodiments, the actions or steps recorded in the claims may be performed in sequences different from those in the embodiments and an expected result may still be achieved. In addition, the processes depicted in the accompanying drawings is not necessarily performed in the specific order or successively to achieve an expected result. In some implementations, multitasking and parallel processing may be feasible or beneficial.

The embodiments of the present disclosure may be a system, a method, and/or a computer program product. A computer program product may include a computer readable storage medium, and the computer readable storage medium carries computer instructions used to enable the processor to implement aspects of the embodiments of the present disclosure.

The computer readable storage medium may be a tangible device that may maintain and store computer instructions used by a computer instruction execution device. For example, the computer readable storage medium may be, but is not limited to, an electrical storage device, a magnetic storage device, an optical storage device, an electromagnetic storage device, a semiconductor storage device, or any suitable combination thereof. More specific examples (a non-exhaustive list) of the computer readable medium include the following: a portable computer disk, a hard disk, a random access memory (RAM), a read-only memory (ROM), an erasable programmable read-only memory (EPROM or a flash memory), a static random access memory (SRAM), a portable compressed disk read-only memory (CD-ROM), a digital versatile disk (DVD), a memory stick, a floppy disk, a mechanical coding device, for example, a punched card in which a computer instruction is stored or a protrusion structure in a groove, and any suitable combination described above. The computer-readable storage medium used herein is not interpreted as an instantaneous signal, such as a radio wave or another freely propagated electromagnetic wave, an electromagnetic wave propagated by using a waveguide or another transmission medium (for example, by using an optical pulse of an optical fiber cable), or an electrical signal transmitted by using a wire.

The computer instructions described herein may be downloaded from a computer readable storage medium to each computing/processing device, or downloaded to an external computer or an external storage device by using a network, such as the Internet, a local area network, a wide area network, and/or a wireless network. The network may include copper transmission cables, optical fiber transmission, wireless transmission, routers, firewalls, switches, gateway computers, and/or edge servers. A network adapter or a network interface in each computing/processing device receives a computer instruction from a network, and forwards the computer instruction, so that the computer instruction is stored in a computer readable storage medium in each computing/processing device.

The flowcharts and block diagrams in the accompanying drawings illustrate the architectures, functions, and operations of possible implementations of systems, methods and computer program products according to a plurality of embodiments of the present disclosure. In this regard, each box in a flowchart or a block diagram may represent a module, a program segment, or a part of a computer instruction. The module, the program segment, or the part of the computer instruction includes one or more executable computer instructions used for implementing designated logic functions. In some implementations used as substitutes, functions annotated in boxes may alternatively occur in a sequence different from that annotated in an accompanying drawing. For example, actually two boxes shown in succession may be performed basically in parallel, and sometimes the two boxes may be performed in a reverse sequence. This is determined by a related function. It should also be noted that, each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction. It is well-known to a person skilled in the art that implementation in a hardware manner, implementation in a software manner, and implementation in a combination of software and hardware is equivalent.

The embodiments of the present disclosure have been described above, and the foregoing descriptions are exemplary, not exhaustive, and is not limited to the disclosed embodiments. Many modifications and variations are obvious to those of ordinary skill in the art without departing from the scope of the described embodiments. Selection of terms used herein is intended to best explain the principle of the embodiments, practical application, or improvements to the technology in the market, or to enable other persons of ordinary skill in the art to understand the embodiments disclosed herein.

## Claims

1. A heating system for heating a power battery, the power battery comprising a first battery core group (1) and a second battery core group (2) connected in series, and an electromotive force of the first battery core group (1) is not equal to an electromotive force of the second battery core group (2);
the heating system comprising an inverter (3), an alternating-current motor (4), and a first controller (5);
the inverter (3) comprising three bridge arms, a positive electrode of the power battery being connected to an upper bridge arm of the inverter (3), and a negative electrode of the power battery being connected to a lower bridge arm of the inverter (3); midpoints of the three bridge arms of the inverter (3) being connected to head ends of three-phase coils of the alternating-current motor respectively, and tail ends of the alternating-current motor being connected together to form a neutral point (N);
the neutral point (N) of the alternating-current motor being connected to a first connection point by means of a connection line (S1), and the first connection point being a connection point (P) between the first battery core group (1) and the second battery core group (2);
the first controller (6) being configured to input a drive signal to the inverter (3); the first battery core group (1), the second battery core group (2), the inverter (3), the alternating-current motor (4), and the connection line (S1) forming an alternating-current self-heating loop; and
the first controller (6) being further configured to adjust the drive signal in a self-heating process, to enable a ratio of a first target difference to a first difference to fall within a preset interval range,
wherein the first target difference is a difference between the first difference and a second difference, the first difference is a difference between an electromotive force of the first battery core group (1) and an electromotive force of the second battery core group (2) when self-heating starts, and the second difference is a difference between an electromotive force of the first battery core group (1) and an electromotive force of the second battery core group (2) when the self-heating ends.

2. The heating system according to claim 1, wherein the preset interval range is (-0.9, +0.9).

3. The heating system according to claim 1, wherein that the first controller (6) adjusts the drive signal in a self-heating process, to enable a ratio of a first target difference to a first difference to fall within a preset interval range comprises:
adjusting, by the first controller (6), a duty cycle of the drive signal and/or a time sequence status of the drive signal in the self-heating process, to enable the ratio of the first target difference to the first difference to fall within the preset interval range.

4. The heating system according to claim 1, wherein that the first controller (6) adjusts the drive signal in a self-heating process, to enable a ratio of a first target difference to a first difference to fall within a preset interval range comprises:
adjusting, by the first controller (6), the drive signal, to enable a ratio of a second target difference to a fifth intensity integration value to fall within the preset interval range,
wherein the second target difference is a difference between the fifth intensity integration value and a sixth intensity integration value, the fifth intensity integration value is an intensity integration value of a current flowing through the first battery core group (1) in the self-heating process, and the sixth intensity integration value is an intensity integration value of a current flowing through the second battery core group (2) in the self-heating process; and an intensity integration value of a current is an integration value of a current intensity of the current in terms of time.

5. The heating system according to any one of claims 1 to 4, wherein that the first controller (6) adjusts the drive signal in a self-heating process, to enable a ratio of a first target difference to a first difference to fall within a preset interval range comprises:
calculating a first theoretical current and a second theoretical current in the self-heating process;
correcting the first theoretical current and the second theoretical current based on a first preset ratio; and
setting the drive signal based on a corrected first theoretical current and a corrected second theoretical current;
wherein the first theoretical current is a theoretical current flowing through the first battery core group (1), and the second theoretical current is a theoretical current flowing through the second battery core group (2).

6. The heating system according to claim 5, wherein the first preset ratio is determined in advance by using a heating test experiment; and
that the first preset ratio is determined comprises:
obtaining, as a second ratio, a ratio of a first intensity integration value of a first experimental current to a first intensity integration value of a second experimental current; and
determining the first preset ratio, wherein the first preset ratio is a reciprocal of the second ratio,
wherein the first experimental current is an actually measured current flowing through the first battery core group (1) in the heating test experiment, and the second experimental current is an actually measured current flowing through the second battery core group (2) in the heating test experiment; and
the first intensity integration value of the first experimental current is an intensity integration value of the first experimental current from a start of the heating test experiment to an end of the heating test experiment, and the first intensity integration value of the second experimental current is an intensity integration value of the second experimental current from the start of the heating test experiment to the end of the heating test experiment.

7. The heating system according to claim 1, wherein that the first controller (6) adjusts the drive signal in a self-heating process, to enable a ratio of a first target difference to a first difference to fall within a preset interval range comprises:
obtaining a second intensity integration value of a first actually measured current and a second intensity integration value of a second actually measured current;
setting a drive signal for a next adjustment period based on the second intensity integration value of the first actually measured current and the second intensity integration value of the second actually measured current,
wherein the first actually measured current is an actually measured current flowing through the first battery core group, and the second actually measured current is an actually measured current flowing through the second battery core group; and
the second intensity integration value of the first actually measured current is an intensity integration value of the first actually measured current from a start of the self-heating to an end of a current adjustment period, and the second intensity integration value of the second actually measured current is an intensity integration value of the second actually measured current from the start of the self-heating to the end of the current adjustment period.

8. The heating system according to claim 1, wherein that the first controller (6) adjusts the drive signal in a self-heating process, to enable a ratio of a first target difference to a first difference to fall within a preset interval range comprises:
obtaining a second intensity integration value of a first actually measured current and a second intensity integration value of a second actually measured current;
obtaining a third intensity integration value of the first actually measured current and a third intensity integration value of the second actually measured current; and
setting a drive signal for a next adjustment period based on the second intensity integration value of the first actually measured current, the second intensity integration value of the second actually measured current, the third intensity integration value of the first actually measured current, and the third intensity integration value of the second actually measured current,
wherein the first actually measured current is an actually measured current flowing through the first battery core group (1), and the second actually measured current is an actually measured current flowing through the second battery core group (2);
the second intensity integration value of the first actually measured current is an intensity integration value of the first actually measured current from a start of the self-heating to an end of a current adjustment period, and the second intensity integration value of the second actually measured current is an intensity integration value of the second actually measured current from the start of the self-heating to the end of the current adjustment period; and
the third intensity integration value of the first actually measured current is an intensity integration value of the first actually measured current within the current adjustment period, and the third intensity integration value of the second actually measured current is an intensity integration value of the second actually measured current within the current adjustment period.

9. The heating system according to claim 7 or 8, wherein the setting a drive signal for a next adjustment period comprises:
setting a duty cycle and/or a time sequence status of the drive signal for the next adjustment period, so that a second absolute value is less than a first absolute value,
wherein the first absolute value is an absolute value of a difference between the second intensity integration value of the first actually measured current and the second intensity integration value of the second actually measured current;
the second absolute value is an absolute value of a difference between a fourth intensity integration value of the first actually measured current and a fourth intensity integration value of the second actually measured current; and
the fourth intensity integration value of the first actually measured current is an intensity integration value of the first actually measured current from the start of the self-heating to an end of the next adjustment period, and the fourth intensity integration value of the second actually measured current is an intensity integration value of the second actually measured current from the start of the self-heating to the end of the next adjustment period.

10. The heating system according to claim 1, wherein that the first controller (6) adjusts the drive signal in a self-heating process, to enable a ratio of a first target difference to a first difference to fall within a preset interval range comprises:
obtaining a first effective value of a first actually measured current and a first effective value of a second actually measured current; and
setting a drive signal for a next adjustment period based on the first effective value of the first actually measured current and the first effective value of the second actually measured current,
wherein the first actually measured current is an actually measured current flowing through the first battery core group (1), and the second actually measured current is an actually measured current flowing through the second battery core group (2); and
the first effective value of the first actually measured current is an effective value of the first actually measured current from a start of the self-heating to an end of a current adjustment period, and the first effective value of the second actually measured current is an effective value of the second actually measured current from the start of the self-heating to the end of the current adjustment period.

11. The heating system according to claim 1, wherein that the first controller (6) adjusts the drive signal in a self-heating process, to enable a ratio of a first target difference to a first difference to fall within a preset interval range comprises:
obtaining a first effective value of a first actually measured current and a first effective value of a second actually measured current;
obtaining a second effective value of the first actually measured current and a second effective value of the second actually measured current; and
setting a drive signal for a next adjustment period based on the first effective value of the first actually measured current, the first effective value of the second actually measured current, the second effective value of the first actually measured current, and the second effective value of the second actually measured current,
wherein the first actually measured current is an actually measured current flowing through the first battery core group (1), and the second actually measured current is an actually measured current flowing through the second battery core group (2); and
the first effective value of the first actually measured current is an effective value of the first actually measured current from a start of the self-heating to an end of a current adjustment period, and the first effective value of the second actually measured current is an effective value of the second actually measured current from the start of the self-heating to the end of the current adjustment period; and
the second effective value of the first actually measured current is an effective value of the first actually measured current within the current adjustment period, and the second effective value of the second actually measured current is an effective value of the second actually measured current within the current adjustment period.

12. The heating system according to claim 10 or 11, wherein the setting a drive signal for a next adjustment period comprises:
setting a duty cycle and/or a time sequence status of the drive signal for the next adjustment period, so that a fourth absolute value is less than a third absolute value,
wherein the third absolute value is an absolute value of a difference between the first effective value of the first actually measured current and the first effective value of the second actually measured current;
the fourth absolute value is an absolute value of a difference between a third effective value of the first actually measured current and a third effective value of the second actually measured current; and
the third effective value of the first actually measured current is an effective value of the first actually measured current from the start of the self-heating to an end of the next adjustment period, and the third effective value of the second actually measured current is an effective value of the second actually measured current from the start of the self-heating to the end of the next adjustment period.

13. The heating system according to claim 7, 8, 10, or 11, wherein an adjustment manner of the first controller (6) is a PID adjustment manner.

14. The heating system according to claim 1, wherein the first controller (6) is further configured to: in the self-heating process, perform synchronization control on an on/off state of three upper bridge arms, and perform synchronization control on an on/off state of three lower bridge arms.

15. The heating system according to claim 1, wherein the first controller (6) is further configured to adjust the drive signal in the self-heating process, so that an average value of an effective value of a current flowing through the first battery core group (1) is between 0.5C and 5C within an entire self-heating period, and an average value of an effective value of a current flowing through the second battery core group (2) is between 0.5C and 5C within the entire self-heating period.

16. The heating system according to claim 1, wherein the first controller (6) is further configured to adjust the drive signal in the self-heating process, so that an average value of an effective value of a current flowing through the neutral point (N) of the alternating-current motor is between 1C and 10C within an entire self-heating period.

17. An electric vehicle, comprising a power battery and the heating system according to any one of claims 1 to 16.
